Europäisches Patentamt

European Patent Office

Office européen des brevets

(19)

(11) Veröffentlichungsnummer: **0 289 830**

**A2**

(12) # EUROPÄISCHE PATENTANMELDUNG

(21) Anmeldenummer: **88106016.4**

(22) Anmeldetag: **15.04.88**

(51) Int. Cl.⁴: **G06K 7/08**

(30) Priorität: **08.05.87 CH 1773/87**

(43) Veröffentlichungstag der Anmeldung:
**09.11.88 Patentblatt 88/45**

(84) Benannte Vertragsstaaten:
**AT BE CH DE ES FR GB GR IT LI LU NL SE**

(71) Anmelder: **BAUMER ELECTRIC AG**
**Hummelstrasse 17**
**CH-8500 Frauenfeld(CH)**

(72) Erfinder: **Weisshaupt, Bruno**
**Talstrasse 4**
**CH-8500 Frauenfeld(CH)**
Erfinder: **Züllig, Daniel**
**Zürcherstrasse 70**
**CH-8500 Frauenfeld(CH)**

(74) Vertreter: **Frei, Alexandra Sarah**
**c/o Frei Patentanwaltsbüro Hedwigsteig 6**
**Postfach 95**
**CH-8029 Zürich(CH)**

(54) **Identifikationssystem mit einer Mehrzahl von Vorrichtungen zum Schreiben, Lesen und Erkennen eines Codes sowie eine Vielzahl von Codeträgern und Verfahren dazu.**

(57) Das Identifikationssystem arbeitet mit einer berührungslosen induktiven Uebertragung einer Information über durch ein elektromagnetisches Feld gekoppelten Schwingkreise. Die Anregung erfolgt mittels die Information repräsentierenden Pulse; verwertet wird die Pulsantwort. Die Vorrichtung dazu, weist ein bis mehrere Paare von Schwingkreisen (A1/B1;A2/B2;A3/B3) und Mittel (21,22,23) zur Aufbereitung der Pulsantwort auf. Ein Positionserkennungsverfahren überträgt eine Testinformation, welche zum seqüentiellen Kurzschliessen eines Schwingkreises auf der Empfängerseite herangezogen wird. Dieser Schwingkreis verhält sich wie ein bedämpfter/nichtbedämpfter Körper in Funktion der Testfunktion. Der Partnerschwingkreis auf der Senderseite wird mit bspw. doppelt so hoher Frequenz wie die Testfrequenz angeregt und seine Pulsantwort enthält durch das definierte Bedämpfungsverhalten die Testfunktion. Wird die Testfunktion daraus wiedererkannt, so klappt die Verbindung und der Schreib-oder Lesebetrieb wird freigegeben. Wird der Schalter statt mit einer Testfunktion mit einer Schaltfolge von Daten aus einem Speicher repräsentierenden elektrischen Grössen betrieben, so kann mit einer Abfragepule darstellenden Anregung im Partnerschwingkreis eine Pulsantwort gewonnen werden, die die Daten aus dem Speicher enthält.

FIG. 2

# IDENTIFIKATIONSSYSTEM MIT EINER MEHRZAHL VON VORRICHTUNGEN ZUM SCHREIBEN, LESEN UND ERKENNEN EINES CODES, SOWIE EINER VIELZAHL VON CODETRAEGERN UND VERFAHREN DAZU.

Die Erfindung liegt auf dem Gebiet der Codeerstellung, -übertragung und -identifikation und betrifft ein Identifikationssystem, bestehend aus einer oder mehreren Code-Schreib/-Leseeinheiten und einer Vielzahl von Codeträgern gemäss der Vorrichtung nach dem Oberbegriff des Hauptanspruchs für die Vorrichtung, sowie ein Betriebs-und ein Positionierverfahren für die Vorrichtung.

Identifikationssysteme haben die Aufgabe, Gegenstände beliebiger Art örtlich und zeitlich vorübergehend zu einem systematischen Ganzen zusammen zu führen, wofür, in der Regel, die Gegenstände mit einem Codeträger versehen werden und an bestimmten Orten Codeleser oder besser Codemelder plaziert sind, mit welchen einerseits der Gegenstand selber (Identifikation) und andererseits Zeit und Ort (Lokation) desselben festgestellt werden. Das systematische Ganze ergibt sich durch Zusammenführung dieser "Meldungen" zur Datenverarbeitung mit Datenverarbeitungsmitteln.

Die Uebertragung des Codes geschieht in der Regel berührungslos, bspw. durch optische oder elektromagnetische Uebertragungsverfahren und das Hauptproblem besteht in der Erlangung einer vollständigen und sicheren Uebergabe des Codes, dies unter Umständen in möglichst kurzer Zeit. So können Positionierungsfehler des Codeträgers vor dem Codeleser zu mangelhaften Lesegeschwindigkeiten oder zu Fehlleistungen überhaupt führen. Die Positionierung bzw. das Erkennen der korrekten Position eines Codeträgers vor einer Schreib-/Lesestelle ist also mit eine der Grundvoraussetzungen für den Betrieb eines Identifikationssystems.

Es ist Aufgabe der Erfindung, eine Vorrichtung mit Codeträger zum Lesen und Schreiben eines Codes vom oder auf einen Codeträger mit gleichzeitiger, zuverlässiger Positionserkennung im statischen sowie dynamischen Betriebsfall zu schaffen und ein Verfahren zum Betrieb der Vorrichtung und ein Verfahren zur Positionserkennung eines Codeträgers in Bezug zu einer Schreib-/Leseeinheit anzugeben. Die Aufgabe soll dahingehend gelöst sein, dass mit der Vorrichtung flexible und organisatorisch offene Identifikations-Systeme erstellbar sind. Unter Vorrichtung wird eine Codier-/Schreib-/Lesestation mit einem zugehörigen Codierelement verstanden, wobei beide Einheiten in einer Vielzahl vorhanden sein können (jede Codier-/Schreib-/Lesestation kooperiert mit jedem Codeträger). Mit dem Betriebsverfahren sollen Schwierigkeiten bei der induktiven, berührungslosen Signalueberragung überwunden werden und mit dem Verfahren zur Positionserkennung sollen Fehlübertragungen von Daten vermieden werden.

Die Aufgabe werden durch die im kennzeichnenden Teil der unabhängigen Patentansprüche definierten Erfindung gelöst.

Ein Ausführungsbeispiel der Vorrichtung, sowie deren Betriebsverfahren und das Verfahren der Positionserkennung werden nun mit Bezug auf die nachfolgend aufgeführten Figuren eingehend diskutiert.

Figur 1 zeigt die Prinzipdarstellung der Vorrichtung, aufgeteilt in einen Codier-und Decodierteil.

Figur 2 zeigt die Vorrichtung im Sinne eines Sensors mehr im Detail.

Figur 3 zeigt schematisch das Prinzip der Signalübertragung, wie sie durch das Betriebsverfahren zustande kommt und

Figuren 4A,B,C zeigen schematisch das Prinzip der Kurzschlusssteuerung, wie sie im Verfahren zur Positionserkennung verwendet wird. Dargestellt ist der Erkennungsvorgang.

Figuren 5,6,7 zeigen Uebertragungssignale im Zusammenhang mit dem Betriebsverfahren.

Figuren 8A und 8B zeigen ein Beispiel der Arbeitsweise der Signalübertragungskanäle A1/B1 und A2/B2 zur Poitionserkennung.

Figur 9 zeigt ein Ausführungsbeispiel der Vorrichtung, bestehend aus einem Schreib-/Leseteil und einem Codeträger, im Detail dargestellt.

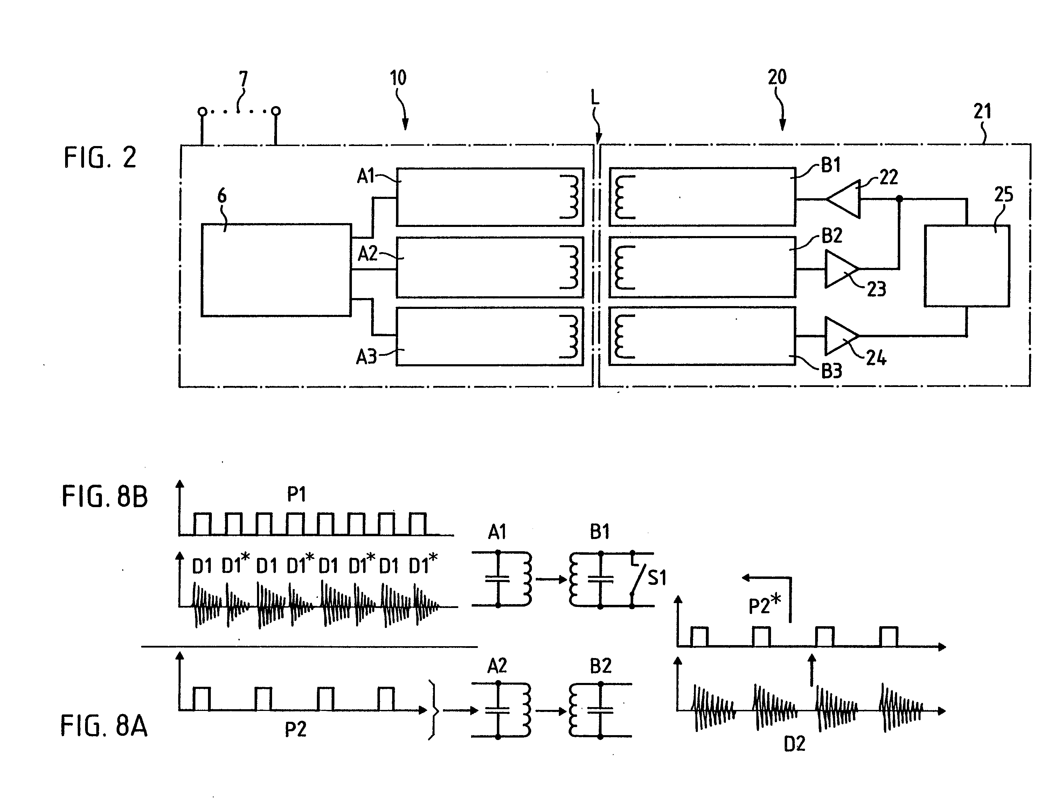

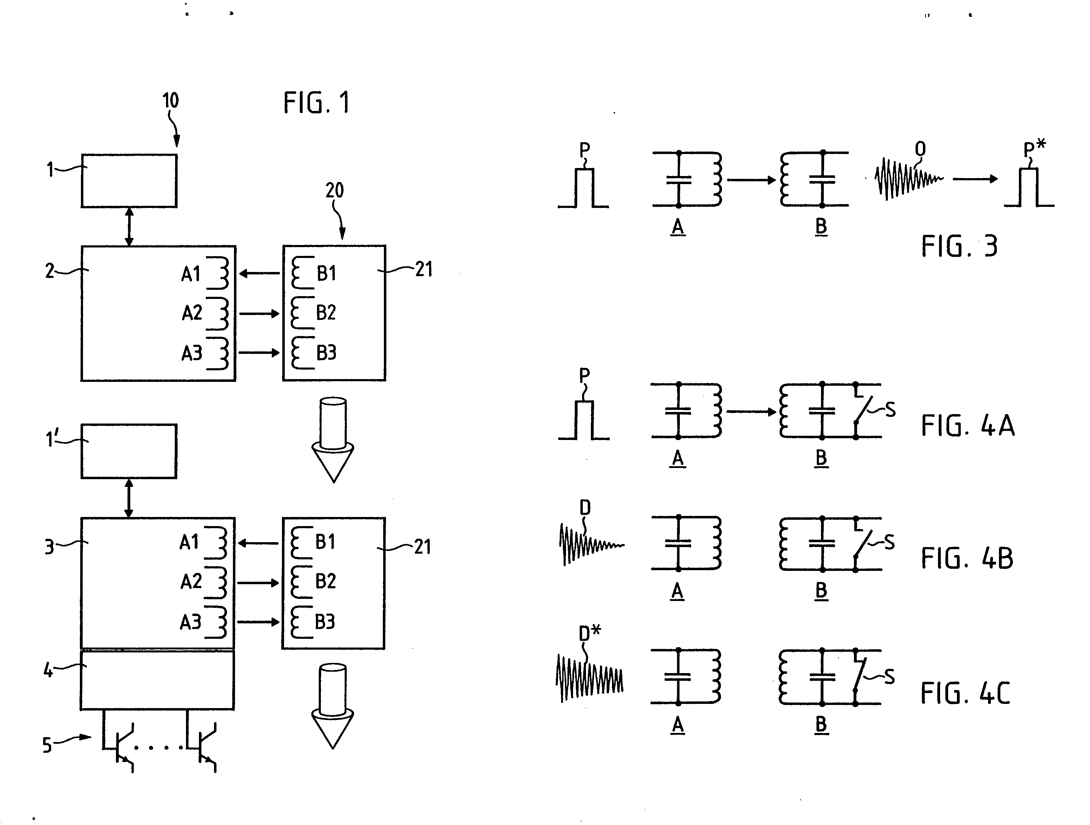

Das Verfahren gemäss Erfindung ist ein berührungsloses Uebertragungsverfahren und verwendet eine induktive Uebertragung von Signalen mittels Pulsanregung und Verwertung der Pulsantwort, wie sie genau in der schweizerischen Patentanmeldung Nr. 4289/86 mit dem Titel "Verfahren zur berührungslosen Detektion von wirbelstrominduzierten Körpern, insbesondere von metallischen Gegenständen, sowie auf das Verfahren abgestützte Sensoren" beschrieben ist. Allerdings wird, wie nachfolgend näher erklärt wird, zur Detektion nicht ein wirbelstrominduzierter Körper benötigt, die Detektion bzw. "Steuerung" findet vielmehr über eine rein elektronische Massnahme statt, wie dies in Figur 3 und den Figuren 4A,B,C gezeigt ist. Diese Figur 3 zeigt zwei in räumlicher Beziehung zu einander stehende Schwingkreise A und B. Der Schwingkreis A wird mit einem Puls P angeregt, der hier als Darstellungsbeispiel auf den Schwingkreis B übertragen werden soll. Der Schwingkreis B reagiert auf die ansteigende Pulsflanke des Pulses P aus dem Schwingkreis A mit einem oszillierenden Signal 0, welches bspw. mit einem Monoflop und/oder Schmitt-Trigger zu einem Puls P* aufbereitet wird.

Die Pulsantwort auf der Seite des angeregten Schwingkreises A, das Decay-Signal, deren Einhüllende oder Enveloppe, ist vom Grad der Bedämpfung und damit direkt von der Distanz eines bedämpfenden Körpers vom angeregten Schwingkreis abhängig, dies ist bspw. ein wirbelstrominduzierter Körper. Beim Verfahren gemäss Erfindung soll die Pulsantwort jedoch nicht von einem wirbelstrominduzierten Körper abhängen, sondern von einem erfindungsgemäss ausgestatteten Codeelement, das in die Nähe der Spule des Schwingkreises gebracht wird. Die Wirkung eines wirbelstrominduzierten Körpers wird durch einen (offenen) Schwingkreis simuliert. Die Figuren 4A,B,C zeigen diesen Sachverhalt. In Figur 4A ist in Anlehnung an Figur 3 eine Anordnung von zwei Schwingkreisen A,B gezeigt, wovon der Schwingkreis B einen Schalter S aufweist, mit welchem durch Oeffnen und Schliessen die beiden Zustände "bedämpft" und "unbedämpft" gesteuert werden können. Ist der Schalter S offen (Figur 4B) so kann von A nach B oder B nach A ein Puls gesendet werden, welcher eine Pulsantwort D in A mit stärkerem Signalabfall provoziert, als es eine unbedämpfte Pulsantwort täte. Ist der Schalter S geschlossen, so verhält sich der Schwingkreis B wie ein nicht bedämpfender Körper (Figur 4C). Mit Schalter S offen kann von B nach A ein Puls übertragen werden, dessen Antwort ein Signal mit einem bedämpften Abfall (decay) sein wird; dies natürlich gleicherweise, wenn ein Puls von A nach B übertragen wird. Mit Schalter S geschlossen, kann von A der kurzgeschlossene Schwingkreis B angepulst werden und die Pulsantwort aus dem Schwingkreis A ist ein Signal mit unbedämpftem Abfall (decay). Somit wird auf der Seite A dann ein bedämpftes Signal empfangen, wenn die Seite B frei schwingen kann und auf der Seite A wird dann ein unbedämpftes Signal empfangen, wenn die Seite B kurzgeschlossen ist. Beide Zustände benötigen ein bestimmte räumliche Ausrichtung der Spulen der beiden Schwingkreise zueinander, im Idealfall die grösstmögliche Koppelung mit den Spulenöffnungen genau übereinander.

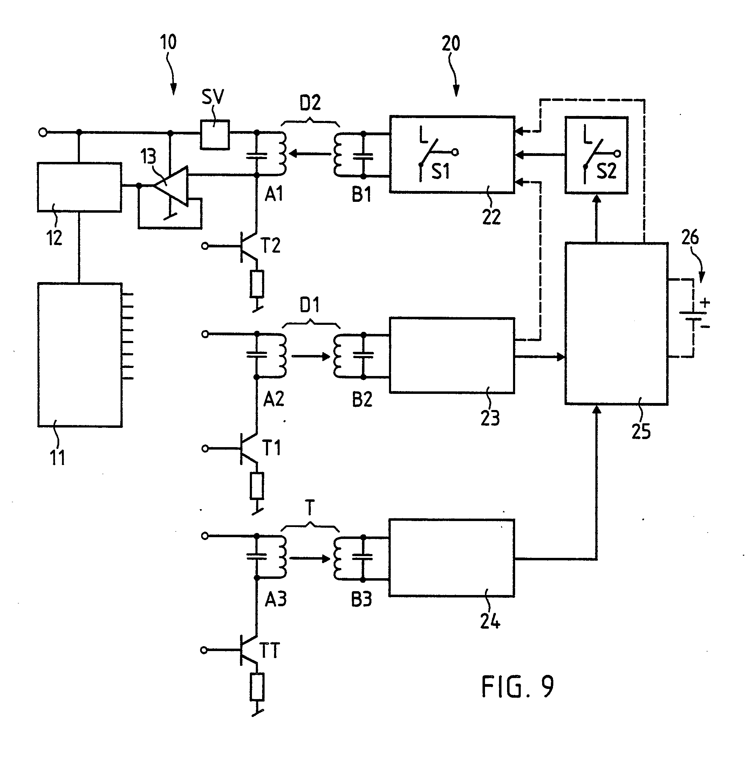

Dieser Sachverhalt wird zu einer schnellen und präzisen Positionierung ausgenützt. Unter dem Begriff Positionierung wird nicht nur der statische Vorgang, das heisst, ein Stillstehen des Codeträgers vor dem Schreib-/Leseteil verstanden, sondern auch die korrekte und zudem wirksame Datenübertragungsposition eines sich in Bewegung befindlichen Codeträgers verstanden. Ein sich am Schreib-/Lese-und Taktteil vorbeibewegender Codeträger kann in Abhängigkeit von seiner Geschwindigkeit, eine mehr oder weniger grosse Anzahl Datenbits übertragen. Das für diesen Vorgang "offene", bzw. benützbare Zeitfenster ist einerseits durch die Geschwindigkeit und andererseits durch den örtlichen Einflussbereich der Schwingkreise (Ausbreitung des Feldes) begrenzt. Innerhalb dieses Zeitfensters ist dann eine Datenübertragung möglich, wenn die momentane Position des Codeträgers korrekt ist. Die korrekte und wirksame Position im Stillstand und in Bewegung, ist Teil des erfindungsgemässen Verfahrens und wird weiter unten im Zusammenhang mit Figur 8 eingehend beschrieben.

Ein Beispiel einer Einrichtung gemäss Erfindung, die diesen Sachverhalt benützt, um einen Code zu schreiben und/oder zu lesen ist in prinzipieller Darstellung in Figur 1 gezeigt. Auf der linken Seite der Figur sind mit der Ziffer 10 eine Codier-/Decodier-Station mit Eingabe und Ausgabe (Stellglieder) und auf der rechten Seite mit der Ziffer 20 die Menge aller Codeträger gezeigt. Die runden Pfeile symbolisieren einen ständigen Strom von Codeträgern, die von der Station oder den Stationen auf der rechten Seite be-und verarbeitet werden. Ein Codeträger 21 aus der Menge aller Codeträger positioniert sich mit periodisch kurzschliessendem Schwingkreis B1 vor der Pulssignale aussendenden Spule des Schwingkreises A1 der Programmierstation 2. Ist die Bedämpfung in Bezug zur Sequenz in Ordnung (wird weiter unten noch genau erklärt), werden die über die Eingabeeinheit 1 vorbereiteten Daten über die Schwingkreise A2/B2 in den Codeträger 21 gelesen. Ein über die Schwingkreise A3/B3 arbeitender Taktkanal liefert den Arbeitstakt dazu. Die Schwingkreise B2 und B3 bleiben dabei ständig offen.

Nun läuft der Codeträger 21 zur Decodierstation, von welchen ein Identifikations-System eine Vielzahl aufweisen kann, und stellt sich dort an einem der Schwinkreise grob ein. Die Feineinstellung geschieht, wie schon erwähnt, über den "Positionierungskanal", das heisst A1(pulsend)/B1-(in Funktion von A2/B2 abwechlungsweise kurzgeschlossen und offen). Wird eine bestimmte Sequenz festgestellt, sendet der "Taktkanal" einen Startimpuls und der Datenstrom kann freigegeben werden. In der so eingestellten Position kann die vorher eingeschriebene Codeinformation von B1 nach A1 übertragen werden. Damit ist der Positioniervorgang beendet und der Lesevorgang etabliert und zwar nur so lange, wie die korrekte Position erhalten bleibt. Der ermittelte Code führt, so er der richtige ist, zur Aktion der Stellglieder in der Stellgliedgruppe 4 und die entsprechenden Funktionen werden über die Schalter 5 aktiviert. Zur weiteren Datenverarbeitung werden die gelesenen Daten an eine übergeordnete Ausgabe-Einheit weiterübertragen. Mit drei Schwingkreispaarun gen können also 4 Funktionen ausgeführt werden: Takten (Organisation), Lesen, Schreiben, Positionieren.

Figur 2 zeigt mehr im Detail die Programmier- und/oder Decodier-Einheit 10 und einen positionierten Codeträger 21 aus der Menge 20 aller Codeträger. Der Luftspalt L zwischen den beiden Einheiten kann bis mehrere Millimeter gross sein und toleriert Abweichungen von einigen Millimetern. Die Programmier-/Decodier-Station umfasst anteilsmässig den Grossteil des elektronischen Aufwandes, das sind die Schaltungsteile für die ganze Organisation der Codeverteilung, den Schreib-und Lesebetrieb, die Positionierung, die Codierung/Decodierung etc.. Dazu ist bspw. ein Single-Chip Mikrokontroller 6 eingesetzt, der über eine Schnittstelle 7 mit der Aussenwelt in Verbindung steht. Codeträgerseitig, das ist die Seite, auf der man bemüht ist, den elektronischen Aufwand möglichst gering zu halten, weil einer Lese-/Schreib-Einheit in der Regel zahlenmässig sehr viele Codeträger gegenüberstehen, sind die Schwingkreise B1,B2,B3 am Ausgang lediglich mit Mitteln 22,23,24 zur Pulsaufbereitung versehen, abgesehen vom Schalter S, und die Codedaten werden vorzugsweise über einen Datenspeicher (bspw. RAM oder EEPROM) mit einem I²C-Bus (Standard-Baustein 25) verwaltet. Die benötigte Energie kann ohne weiteres durch die Taktimpulse übertragen werden, eine realistische Leistungsaufnahme beträgt weniger als 30 Mikrowatt (3V;10uA). Auf diese Weise wird kostenmässig ein sehr attraktives Verhältnis zwischen dem Elektronikaufwand der Codeträger und dem Elektronikaufwand der Codeverarbeitungs-Stationen geschaffen. Das heisst mit anderen Worten, es wurde ein Datenträger (Speicher) berührungslos an einen Mikrokontroller angeschlossen, in dem die üblichen galvanischen Verbindungen durch ein berührungsloses Uebertragungsprinzip ersetzt werden, wobei der ganze Uebertragungsaufwand jedoch im Mikrokontroller bzw. im Datenspeicher gelöst werden.

Bei einer Spaltbreite zwischen Codeträger und Lese-/Schreibeinrichtung von einigen Millimetern, ist auch die Reichweite beim Lesen/Schreiben so gross, dass bei einer Vorbeibewegung, also ohne statische Positionierung aber mit einer Positionserkennung schon genügend Daten transferiert werden können, um bei einer relativen Geschwindigkeit von ungefähr 500 mm/sec noch Datenbytes auszutauschen. Diese Datenmenge ist für eine Groberkennung, bspw. eine Zonenzugehörigkeit von codierten Paletten, völlig ausreichend, sodass auch die Prozessgeschwindigkeit, eines mittels dem Identifikationssystem mit Vorrichtung und Verfahren gemäss Erfindung überwachten Prozesses wesentlich erhöht werden kann.

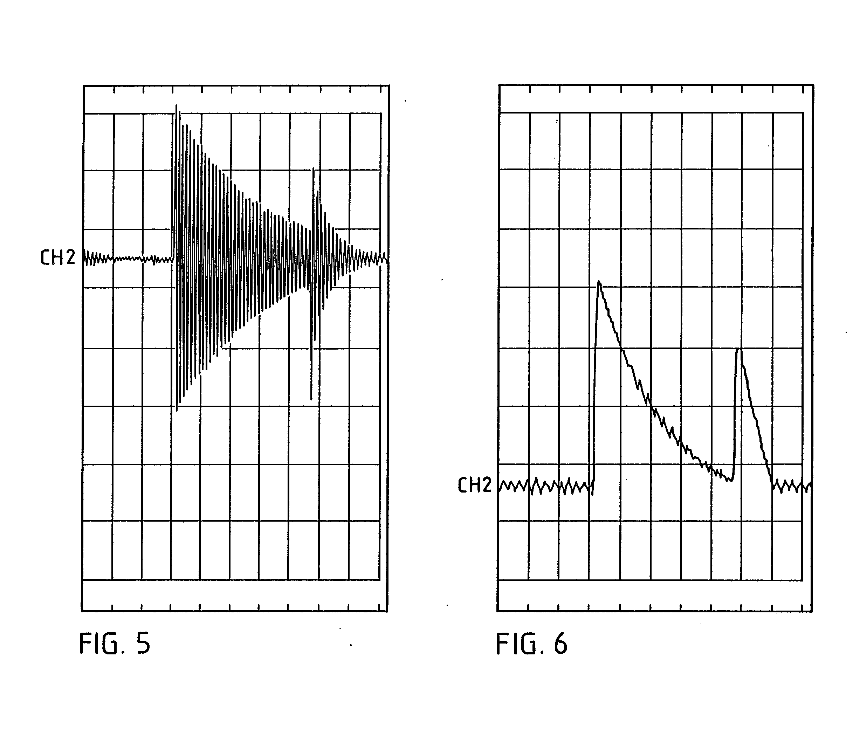

Figur 5 zeigt nun eine typische Pulsantwort, wie sie in A1, angeregt durch B1 im Lesekanal, bzw. im Positionierkanal erscheint. Es ist eine in einer e-Funktion abklingende Schwingung, die mittels der ersten Flanke des Pulses ausgelöst wurde. Der daran anschliessende neue Decay wurde durch die zweite Flanke des Pulses generiert. Figur 6 zeigt dasselbe, gleichgerichtete Signal, bei dem die Enveloppe zur weiteren Signalverarbeitung verwendet wird. Die Pulslänge liegt in der Grössenordnung von 5 bis 50 usec und die Pulsrepetitionsfrequenz bei einigen kHz.

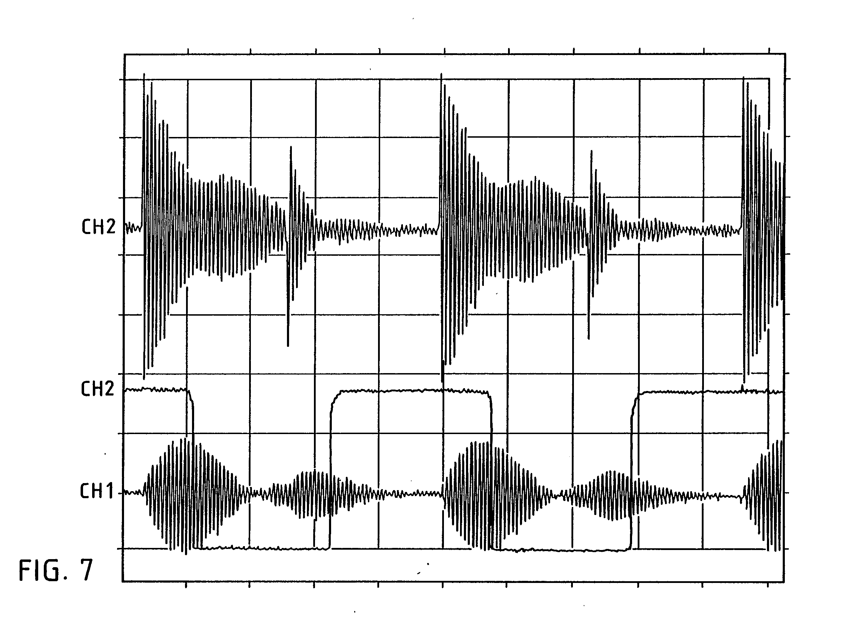

Figur 7 zeigt einen charakteristischen Pulszug CH2, wie er aus der Pulsantwort CH1 (oben) aufbereitet wird. Dabei ist die in Resonanz aufschwingende Signalform CH2 (unten) der offenen LC-Kreise B2 bzw. B3 in Abhängigkeit der Pulsantwort A2 bzw. A3 primärseitig dargestellt, wobei diese Pulsantworten hier nicht ausgewertet werden, da nur eine Uebertragung primär-sekundär gewünscht ist. Grundsätzlich ist es dabei einerlei, ob ein Puls von einem Schwingkreis auf den andern übertragen wird, oder ob der Schwingkreis nach Abschalten des Eingabepulses auf denselben Puls mit einer nachfolgenden Pulsantwort reagiert. Der Vorgang der Übertragung wird für Takten/Schreiben verwendet und der Vorgang der "Rückantwort" beim Anpulsen eines kurzgeschlossenen Schwingkreises für die Positionierung, sowie für die Datenrücküberübertragung bzw. das Lesen.

Die Figuren 8A und 8B zeigen die Arbeitsweise der beiden Uebertragungskanäle A1/B1 und A2/B2 während der Positionierung. Dargestellt ist die Uebertragung und Rückgewinnung eines Pulszuges P2 mit Hilfe des gesteuerten Schaltmittels S im Schwingkreis B1. Figur 8A zeigt die Uebertragung einer Pulssequenz P2 durch den Schwingkreis A1 zum Schwingkreis B1, an welchem, als Antwort darauf, eine Folge von Oszillationen 0 erscheint. Diese Sequenz 02 wird zu einer Pulssequenz P2* aufgearbeitet, welche die wieder zu gewinnende ursprüngliche Pulssequenz P2 exakt abbildet. Mit dieser Pulssequenz P2* wird der Schalter S im Schwingkreis B1 gesteuert. Damit verhält sich der Schwingkreis B1 in Funktion zur Pulssequenz P2 als ein den Schwingkreis A1 bedämpfender oder nichtbedämpfender Körper. Wird nun, wie in Figur 8B gezeigt, der sich durch die Schaltfunktion definiert verhaltende Schwingkreis B1 vom Schwingkreis A1 her mit der Pulssequenz P1, welche hier die doppelte Frequenz der Pulssequenz P2 aufweist, angepulst, so kann am Schwingkreis A1 die in Figur 8B gezeigte Pulsantwort D1/D1* abgelesen werden. Diese Pulsantwort ist eine Folge von bedämpften und unbedämpften Pulsdecays, in welcher die Funktion des Pulszuges P2 enthalten ist. Mittels einer Diskrimination der Pulsantworten D1 von D1* oder umgekehrt, lässt sich der übertragene und rückgewonnene Pulszug P2(rück) oder P2-(back) mit dem ursprünglichen Pulszug P2 durch Vergleich bestätigen. Nach der Bestätigung wird der Schreib-oder Lesevorgang freigegeben und der Datenstrom kann einsetzen. Mit dieser, hier recht ausführlich beschriebenen, Probe-oder Testübertragung, welche vorzugsweise in den Gesamtbetrieb des Identifikationssystem integriert ist, kann zu jeder Zeit nicht nur die korrekte Positionierung der Codeträger festgestellt, sondern auch herbeigeführt werden, in dem dieser Vorgang in die Steuerung der Prozesselemente miteinbezogen wird, welche mit den Codeträgern versehen sind und codiert und/oder identifiziert werden sollen.

Der Vorgang der Positionserkennung (Test) läuft, verglichen mit der Bewegungsgeschwindigkeit eines Codeträgers sehr schnell ab. Damit eignet sich dieses Verfahren zur Positionierung einerseits und zur Positionsüberwachung während einer Schreib-oder Lesefunktion andererseits. Dabei sind Arbeitsvorgänge aller Art durchführbar.

Beispielsweise können beim Heranfahren einer mit einem Codeträger markierten Palette, nach der Feststellung einer korrekten Lese-Position (Test) noch während der Bewegung die Identität (Daten) abgefragt werden. Während dieser Zeit bewegt sich die Palette bspw. ständig weiter, die Schreib-/Lesebereitschaftskontrolle (Test) bleibt dabei in Betrieb. Wird die Identität (Daten) als richtig bestätigt, so wird die Palette angehalten und weitere Daten, vom Codeträger entweder ausgelesen oder auf diesen geschrieben. Die korrekte Position wird auch bei diesem Vorgang ständig überwacht (Test) und der Datenstrom wird sofort unterbrochen, wenn die korrekte Position verlassen wird (Test negativ) und setzt wieder ein, wenn sie bspw. durch eine Korrektur wieder eingenommen ist (Test positiv). Damit ist die angestrebte sichere Datenübertragung in jede der Uebertragungsrichtungen gewährleistet, dies auch unter den Bedingungen, wenn bspw. ein Codeträger beim Vorbeibewegen an einer Schreibstation mit Daten beschrieben werden soll, oder beim Vorbeibewegen an einer Lesestation abgefragt werden soll.

Figur 9 zeigt nun mehr im Detail die Vorrichtung gemäss Erfindung, bestehend aus einer Schreib-/Leseseite 10 und Codeträgerseite 20 mit den positionierten Datenkanälen D1 und D2, sowie dem Taktkanal, der auch gleichzeitig zur Energieübertragung für die Schaltung auf dem Codeträger dienen kann. Die Schreib-/Lese-/Positionier-/Speise-Einheit 10 ist an eine Stromquelle V angeschlossen. Sie enthält nebst anderen Schaltungsteilen einen Mikroprozessor 11 (bspw. Singlechip 80535), eine Auswerteschaltung 12,13 zur Auswertung der Bedämpfung der Rückpulse im Positionier-und Lesekanal, drei Schwingkreise A1,A2,A3 mit ihren zugehörigen Schaltmitteln, hier allgemein als Transistoren dargestellt, deren Basen, hier als Port bezeichnet, vom Mikroprozessor gesteuert werden. Die Kanäle T und D1 arbeiten in einer Richtung (unidirektional) zum Codeträger hinüber, obschon sie prinzipiell in beiden Richtungen (bidirektional) arbeiten können. Der Daten-/Positionierkanal D2 arbeitet in die Gegenrichtung, auch beim Positionierprozess. Wie die Signaldämpfung und Rückantwort beim Positionserkennungsvorgang genau funktionieren, steht in der Eingangs erwähnten Patentschrift genau beschrieben.

Der Codierteil 20 enthält neben anderen Schaltungsteilen drei Schwingkreise B1,B2,B3 als Partner zu den Schwinkreisen der Seite 10. Die Pulsaufbereitungsmitel 22,23,24 sind in allgemeiner Darstellung gezeigt, empfohlen wird jedoch ein Schmitt-Trigger und ein Monoflop (bspw. 4538). Der Speicherteil für den Code ist ein RAM unter der Verwaltung eines I²C-Bus, welcher Baustein über den Taktkanal B3,24 getaktet ist. Empfohlen ist ein PFC 8571, der allerdings durch eine kleine Stromquelle (Batterie) 26 gestützt werden muss oder ein entsprechendes EEPROM, das ohne Stromquelle die Daten im Speicher erhält. Die Daten werden über den Schreibkanal D1 in den Baustein eingelesen und über den Lesekanal D2 vom Baustein ausgelesen. Die Betätigung des Schalters S wird vom leserseitigen Mikroprozessor veranlasst, der den Positioniervorgang organisiert und über den Taktkanal die Datenübertragung zeitlich abstimmt. Damit kann der Datenaustausch stattfinden.

Ein mit den hier diskutierten Vorrichtungen realisiertes und mit den hier vorgestellten Verfahren betriebenes Identifikationssystem, zeichnet sich durch eine unerreichte Flexibilität aus. Dies nicht nur wegen der nach oben unbeschränkten Zahl der einsetzbaren Vor richtungen und Codeträger, sondern auch wegen der Fähigkeit der Codierträger sich beliebig oft umcodieren zu lassen. So ist es möglich, mitten in einem Prozess irgend ein beliebiges Element neu zu codieren, dies in einem Moment, in dem der Codeträger an einer Schreibstation positioniert ist, oder aber in Bewegung, wenn der Codeträger an einer Schreibstation vorbeiläuft. Dasselbe ist natürlich auch für den Lesevorgang möglich.

Ferner zeichnet sich die Vorrichtung durch betriebliche Robustheit aus. Die korrekte Datenübertragung ist noch gewährleistet, wenn im Betrieb bspw. Vibrationen, Oszillationen oder ein Schütteln der Vorrichtung vorkommt. Statt der Uebertragung fehlerhafter Daten, findet überhaupt keine Datenübertragung statt, da diese nur dann zugelassen wird, wenn die korrekte Positionierung und damit die sichere Daten-Uebertragung gewährleistet ist. Die geradezu ideale Verteilung der elektronischen Mittel auf stationäre und bewegliche Teile bei dem vorliegenden Uebertragungsverfahren, nämlich mit den drei Spulen"strecken" für Daten EIN und Daten AUS unter Verwendung eines seriellen, ansteuerbaren Datenspeichers mit geringem Interface-Aufwand auf der Datenträgerseite, ermöglicht einen minimalisierten Aufbau des Codeträgers (beweglicher Teil), wodurch ein Einsatz praktisch grössenunabhängig in unzähligen Applikationen ermöglicht wird.

Das induktive, berührungslose Uebertragungsverfahren nach dem Prinzip Pulsanregung/Pulsantwort eignet sich für nichtgalvanische Kopplungen bzw. Trennungen ähnlich dem Prinzip des Optokopplers. Es können auf diese Weise Daten übertragen werden, dies hauptsächlich von einer stationären auf eine nichtstationäre Baugruppe. Damit lassen sich beliebig erweiterbare Identifikationssysteme schaffen.

Die Positionierung bzw. die Positionserkennung, die einen ungestörten Datenübertragungsbetrieb ermöglicht, basiert auf der Ubertragung einer Testfunktion (Pulsreihe), welche auf der Empfängerseite zur definierten Kurzschlussfolge eines empfängerseitigen Schwingkreises verwendet wird. Der betroffene Schwingkreis verhält sich in Bezug zum senderseitigen Partnerschwingkreis wie ein abwechselnd bedämpfter/nichtbedämpfter Körper, sodass die Pulsantwort aus einer "kohärenten" Anregung des Partnerschwingkreises die Testfunktion enthält und ausfiltriert werden kann. Erscheint die Testfunktion nach der Uebertragung und Rückübertragung auf der Senderseite wieder, so ist dies die Erfüllung einer Freigabebedingung für den Datenaustausch. Als zusätzliches apparatives Merkmal für die Positionserkennung ist das Schaltmittel zur Kurzschliessung eines Schwingkreises nötig.

Diese eben beschriebene Schaltfunktion kann auch generell für die Datenübertragung verwendet werden. Als Beispiel soll hier der Lesebetrieb anhand der Figuren 8 und 9 diskutiert werden. Angenommen, die Pulsfolge P2 in Figur 8A stellt einen Datenstring dar, der auf den Codeträger mit den Schwingkreisen Bx übertragen, dort aufbereitet und im Speicher 25 (bspw. ein E$^2$PROM) abgespeichert wird. Die Rückübertragung dieser, oder auch anderer Daten aus dem Speicher verläuft dann folgendermassen: In der Funktion eines Datenstrings, das ist eine Pulsfolge, wird der Schalter S1 geöffnet und geschlossen, wodurch die Daten als serielles Bedämpfungsmuster am Schwingkreis B1 abgebildet werden. Wird nun der Partnerschwingkreis A1 mit einer Serie von Abfragepulsen angeregt, so kann an ihm zwischen den Abfragepulsen eine Pulsantwort abgelesen werden, die als Gesamtheit betrachtet die zu übertragenden Daten beinhalten. Dabei ist es möglich, über einen zweiten Schalter S2 den Lese-Betrieb mit der Positionserkennung so zu verschachteln, dass die Uebertragung der Daten ständig überwacht wird.

Das hier beschriebene Verfahren zur Datenübertragung mittels einer zusätzlichen Bedämpfungsfunktion bietet den Vorteil, dass auf der Seite des Speichers 25 und den Pulsaufbereitungsmitteln 21,22,23 und den Schwingkreisen B1,B2,B3, ein ganz markant energiearmer Betrieb möglich ist. Bezeichnet man die Schreib-, Lese-und Takteinheit mit den Schwingkreisen Ax als A-Seite und den bspw. Codeträger mit dem Speicher und den Schwingkreisen Bx als B-Seite, so kann man den Energiebedarf folgendermassen beschreiben. Die Energie wird beim Schreiben in den Speicher auf der B-Seite von der A-Seite geliefert, auch die für den Takt nötige Energie kommt von der A-Seite. Beim Auslesen des Speichers kommt die Energie für den Takt und für die Betägigung des Schalters S1 (und Schalter S2) im Schwingkreis B1 auch von der A-Seite, das heisst, die A-Seite treibt den Codeträger so an, dass er auf einem Schwingkreis ein Bedämpfungsverhalten zeigt, welches exakt die auszulesenden Daten abbildet. Ebenfalls mit Energie der A-Seite werden im Partnerschwingkreis die Abfragepulse generiert und die Pulsantwort aufbereitet und ausgewertet. So betrachtet verhält sich die B-Seite passiv, vergleichbar mit einem Hologramm, welches die Information enthält und mit einem Laserstrahl, also ähnlich wie die Abfragetätigkeit der A-Seite, abgelesen wird.

Einige Vorteile dieses Verfahrens liegen auf der Hand. Beispielsweise bei einer Verwendung in einem Identifikationssystem mit stationären, energie-und informationliefernden Schreib-, Lese-und Takteinheiten und einer daran gemessenen Vielzahl mobiler Codeträger die beliebig codiert und wieder umcodiert und stehend oder in Bewegugn gelesen oder beschrieben werden können, ohne dass heikle Energieversorgungsprobleme der mobilen Teile gelöst werden müssen. Die in Figur 9 dargestellte Stützbatterie 26 kann bei einer Verwendung von E2PROMs auch wegelassen werden. In dieser Hinsicht hat man die Wahl, da eine Stützbatterie einen jahrelangen Betrieb durchaus ermöglichen kann.

## Ansprüche

1. Verfahren zur berührungslosen, induktiven Uebertragung von Daten von oder zu einem Datenträger, dadurch gekennzeichnet, dass Daten repräsentierende Pulse zur Anregung eines ersten Schwingkreises benützt werden und dass mit einem zweiten Schwingkreis das elektromagnetische Feld des ersten Schwingkreises aufgenommen und an diesem die Pulsantwort zu Daten repräsentierenden Pulsen verarbeitet wird.

2. Verfahren nach Anspruch 1, daurch gekennzeichnet, dass die aus der Pulsantwort gewonnenen Daten in einem Datenspeicher gespeichert und zum Wiederauslesen bereitgehalten werden.

3. Verfahren nach Anspruch 2, dadurch gekennzeichnet, dass der Datenspeicher auf einem Codierteil angeordnet ist, welcher Gegenständen zugeordnet wird, um sie in einem Identifikationssystem identifizierbar zu machen.

4. Verfahren nach einem der Ansprüche 1 bis 3, dadurch gekennzeichnet, dass mit je einem ersten und zweiten, über ein elektromagnetisches Feld gekoppelte Schwingkreise Uebertragungskanäle für einen Lese-, sowie einen Schreibkanal für Datenpulse und einen Taktkanal für Takt-oder Steuerpulse geschaffen werden.

5. Verfahren nach einem der Ansprüche 1 bis 4, dadurch gekennzeichnet, dass zur Steuerung der Uebertragung und zur Verwaltung der zu übertragenden Daten in einem stationären Vorrichtungsteil ein Mikroprozessor und in einem nichtstationären Vorrichtungsteil ein I²C-Bus vorgesehen ist.

6. Verfahren nach Anspruch 5, dadurch gekennzeichnet, dass der stationäre Vorrichtungsteil eine Schreib-und/oder Leseeinheit und der instationäre Vorrichtungsteil ein Codeträger aus einer Mehrzahl von gleichen Codeträgern ist.

7. Vorrichtung zur berührungslosen, induktiven Uebertragung von Daten und/oder Taktsignalen und/oder Energie, gekennzeichnet durch einen ersten Schwingkreis (A) in Verbindung mit einem die zu übertragenden Daten in Form von Pulsen abgebenden Pulsgenerator und einen im elektromagnetischen Feld des ersten Schwingkreises angeordneten zweiten Schwingkreis (B) verbunden mit die Pulsantwort des zweiten Schwingkreises (B) zu Pulsen aufbereitenden Mitteln (22,23,24), welche mit einem Speichermittel (25) zum Speichern der übertragenen, durch die Pulse repräsentierten Daten.

8. Vorrichtung zur berührungslosen, induktiven Uebertragung von Daten von oder zu einem Datenträger bestehend aus einem Schreib-/Lese-und Taktteil (10) und einer Mehrzahl (20) diesem Teil zugeordneten Codeträgern (21), dadurch gekennzeichnet, dass der Schreib-/Lese-und Taktteil (10) und der Codierteil (21) miteinander korrespondierende Schwingkreise (A1,A2,A3;B1,B2,B3) zum Austausch von Daten und/oder Energie und/oder Information, und der Schreib-/Lese-und Taktteil (10) Datenverarbeitungsmittel (6) und der Codeteil (21) Speichermittel (25) für diese Datenverarbeitungsmittel (6) aufweisen.

9. Vorrichtung nach Anspruch 8, dadurch gekennzeichnet, dass die Anzahl der Schwingkreise pro Schreib-/Lese-und Taktteil (10) drei Schwingkreise (A1,A2,A3) und pro Codeträger (21) ebenfalls drei Schwingkreise (B1,B2,B3) beträgt, zur Bildung eines Taktkanals (T) zur Uebertragung von Taktinformation, eines Schreibkanals (D1) zur Uebertragung von Daten auf den Codeträger, eines Lesekanals D2 zur Uebertragung von Daten aus dem Codeträger.

10. Vorrichtung nach einem der Ansprüche 8 oder 9, dadurch gekennzeichnet, dass auf dem Codeträger (21) ein Schwingkreis (B1) mit Schaltmitteln (S) vorgesehen ist und ein Schwingkreis des Schreib-/Lese-und Taktteils (10) mit Auswertemitteln (12,13) zur Auswertung eines ausklingenden Signals versehen ist.

11. Verwendung der Vorrichtung nach Anspruch 8 in einem Identifikationssystem mit einer Mehrzahl von Schreib-und Leseeinheiten und einer Mehrzahl von Codeträgern.

12. Verfahren zur Positionserkennung einer Vorrichtung nach Anspruch 10, dadurch gekennzeichnet, dass ein Partnerschwingkreis (B1) eines über das elektromagnetische Feld gekoppelten Schwingkreispaares (A1,B1) in Funktion der Pulsfolge einer zu übertragenden Information kurzgeschlossen wird und der nicht kurzgeschlossene Schwingkreis (A1) mit einer eigenen Pulsfolge der doppelten Frequenz angeregt und seine eigene Pulsantwort verwertet wird.

13. Verfahren nach Anspruch 12, dadurch gekennzeichnet, dass die für die Kurzschlussfolge verwendete Pulsfolge über ein zweites gekoppeltes Schwingkreispaar (A2,B2) übertragen wird.

14. Verfahren zur Positionierung eines Codeträgers (21) vor einem Schreib-/Lese-und Taktteil (10) der Vorrichtung nach Anspruch 8 und 10, dadurch gekennzeichnet, dass ein Schwingkreis (B1) auf einem Codeträger (21) in Funktion der Pulsfolge einer zu übertragenden Information kurzgeschlossen wird und während dieser Zeit der korrespondierende (A1) Schwingkreis auf dem Schreib-/Lese-und Taktteil Pulse aussendet und seine eigene Pulsantwort auswertet und dass die die Kurzschlusssequenz auslösende Pulsfolge über ein zweites, auf dem Codeträger (21) und dem Schreib-, Lese-und Taktteil angeordnetes, gekoppeltes Schwingkreispaar (B2,A2) vom Schreib-, Lese-und Taktteil (10) auf den Codeträger (21) übertragen und die Pulsantwort im Schwingkreis (B2) auf diesem zur Kurzschlusssequenz aufgearbeitet wird.

15. Verfahren nach Anspruch 14, dadurch gekennzeichnet, dass für die Freigabe des Schreib-und/oder Lesebetriebs die auf den Codeträger übertragene Information zur Betätigung der Kurzschlussfunktion in der durch Kurzschluss/Bedämpfung definierten Pulsantwort auf dem Schreib-, Lese-und Taktteil wieder entnommen werden kann.

16. Verfahren nach Anspruch 14 und 15, dadurch gekennzeichnet, dass die Frequenz zur Erzeugung einer Pulsantwort im Partnerschwingkreis (A1) zum kurzgeschlossenen Schwingkreis (B1) doppelt so hoch ist, wie die Schaltfrequenz zur Erzeugung der Kurzschlussfolge.

17. Verfahren zur berührungslosen induktiven Uebertragung von Daten von oder zu einem Datenträger, dadurch gekennzeichnet, dass Daten repräsentierende EIN-und AUS-Vorgänge zum Schliessen und Oeffnen eines einen ersten Schwingkreis kurzschliessenden Schalters verwendet werden und dass mit einem im elektromagnetischen Feld des ersten Schwingkreises angeordneten zweiten Schwingkreis das Kurzschluss-/Nichtkurzschlussverhalten des ersten Schwingkreises abgelesen wird.

18. Verfahren nach Anspruch 17, dadurch gekennzeichnet, dass der Ablesevorgang des zweiten Schwingkreises durch Anregung mit Abfragepulsen und Auswertung der Pulsantwort durchgeführt wird.

19. Verfahren nach Anspruch 17 und 18, dadurch gekennzeichnet, dass der Schwingkreisschalter (S1) eines ersten Schwingkreises (B1) in einer elektrischen Folge betätigt wird, die ausgelesenen Daten aus einem Speicher entspricht und dass simultan dazu im Partnerschwingkreis (A1) eine Schwingkreisanregung durch Abfragepulse vorgesehen ist und die Pulsantworten der Abfragepulse verwertet werden.

20. Verfahren nach Anspruch 19, dadurch gekennzeichnet, dass durch Betätigung eines zweiten Schalter (S2) ein verschachtelter Betrieb zur Positionserkennung gemäss Anspruch 12 und ein Lesebetrieb gemäss Anspruch 17 herbeigeführt wird.

21. Verwendung der Vorrichtung nach Anspruch 10 für das Verfahren nach Anspruch 17.

FIG. 2

FIG. 8B

FIG. 8A

0 289 830

FIG. 3

FIG. 4A

FIG. 4B

FIG. 4C

FIG. 1

FIG. 6

FIG. 5

FIG. 7

FIG. 9